## Europäisches Patentamt
## European Patent Office
## Office européen des brevets

(19)

(11) Numéro de publication: **0 215 717**
**B1**

(12)

# FASCICULE DE BREVET EUROPÉEN

(45) Date de publication du fascicule du brevet:
**14.12.88**

(21) Numéro de dépôt: **86402027.6**

(22) Date de dépôt: **17.09.86**

(51) Int. Cl.⁴: **F 23 R 3/00,** F 23 R 3/18,
B 29 C 67/18

(54) **Procédé de fabrication d'un anneau brûleur en matériau composite et anneau bruleur réalisé suivant ledit procédé.**

(30) Priorité: **18.09.85 FR 8513794**

(43) Date de publication de la demande:
**25.03.87 Bulletin 87/13**

(45) Mention de la délivrance du brevet:
**14.12.88 Bulletin 88/50**

(84) Etats contractants désignés:
**DE FR GB IT SE**

(56) Documents cité:
**GB-A-2 024 403**
**GB-A-2 107 630**
**US-A-2 964 907**
**US-A-4 278 485**

(73) Titulaire: **SOCIETE NATIONALE D'ETUDE ET DE
CONSTRUCTION DE MOTEURS D'AVIATION,
"S.N.E.C.M.A.", 2 Boulevard Victor, F-75015 Paris
(FR)**

(72) Inventeur: **Jourdain, Gérard Ernest André, 4,
Résidence l'Arcadie, Saintry S/Seine F-91100-
Corbeil Essonnes (FR)**
Inventeur: **Marlin, François Marie Paul, 64, Bd
Aristide Briand, F-77000 - Melun (FR)**

(74) Mandataire: **Moinat, François, S.N.E.C.M.A.
Service des Brevets Boîte Postale 81, F-91003
Evry Cédex (FR)**

EP 0 215 717 B1

### Description

La présente invention a pour objet un procédé de fabrication d'un brûleur en matériau composite et un anneau brûleur réalisé suivant ledit procédé.

L'utilisation des matériaux composites a été pendant longtemps limitée à la fabrication d'éléments de structures froides, les caractéristiques mécaniques des résines se dégradant rapidement avec la température.

L'existence de matériaux du type céramiques permet maintenant de les employer dans les parties chaudes des moteurs et même dans les chambres de combustion.

On a ainsi réalisé des volets de tuyères ou des obstacles d'inverseurs en tissus "carbone-carbone" ou des tuyères d'éjection de moteurs fusées (voir, par exemple, le GB-A-2 107 630).

Dans certains essais de réalisation d'anneaux brûleurs à structure hybride comportant des pièces de fixation métalliques, il a été prévu une fixation de ces pièces et des bossages d'arrivée de carburant par collage ou rivetage sur l'anneau.

Toutefois, en raison des coefficients de dilatation très différents des éléments céramiques et des éléments métalliques, il se produit des décohésions au sein des couches de fibres et le potentiel de fonctionnement de ces ensembles est très limité.

Le procédé suivant l'invention a pour objet de permettre la réalisation d'anneaux tout en céramique.

Conformément à la présente invention on utilise un procédé dans lequel l'anneau est réalisé par bobinage sur un mandrin torique d'un matériau réfractaire du type carbone ou céramique et, lorsque le bobinage est parvenu à une épaisseur déterminée, de des éléments rapportés sont fixés sur le bobinage dont la réalisation est reprise ensuite jusqu'à ce qu'il atteigne son épaisseur définitive en intégrant lesdits éléments rapportés, ledit bobinage après une céramisation ou carbonisation étant ensuite découpé circonférentiellement suivant un plan perpendiculaire à l'axe du tore de manière à obtenir deux anneaux en forme de gouttière qui sont séparés du mandrin et portent les éléments rapportés.

L'anneau brûleur obtenu par ce procédé permet d'éviter les inconvénients que l'on rencontre dans les structures hybrides où les pièces sont réalisées avec des moyens de fixation métalliques. Par ailleurs, l'intégration des éléments rapportés sur l'anneau assure une meilleure tenue mécanique.

D'autres caractéristiques et avantages de l'invention ressortiront de la description qui va suivre de plusieurs modes de réalisation et en se référant aux dessins annexés sur lesquels:

La figure 1 est une vue en coupe transversale d'un anneau au cours de sa réalisation par le procédé suivant l'invention.

La figure 2 est une vue de dessus de l'anneau au cours de sa réalisation.

La figure 3 est une vue en perspective de deux demi- coquilles formant un bras radial avant assemblage.

La figure 4 est une vue en élévation latérale d'une demi- coquille de bras radial.

La figure 5 est une vue en élévation de face d'une demi- coquille de bras radial.

La figure 6 est une vue en coupe suivant la ligne VI VI de la figure 5.

La figure 7 est une vue en coupe suivant la ligne VII VII de la figure 5.

Les figures 8 et 9 sont des vues en élévation d'une entretoise disposée entre les brides radiales.

Les figures 10 et 11 sont des vues en élévation de bras radiaux.

La figure 12 est une vue en élévation d'une bride de fixation.

La figure 13 est une vue en coupe suivant la ligne XIII XIII de la figure 12.

La figure 14 est une vue en coupe suivant la ligne XIV XIV de la figure 12.

Les figures 15, 16 et 17 sont des vues d'une bride de fixation avec une entretoise et de l'entretoise.

La figure 18 est une vue en élévation latérale d'un bossage d'arrivée de carburant.

La figure 19 est une vue de face d'une demi-coquille d'un bossage d'arrivée de carburant.

La figure 20 est une vue en coupe suivant la ligne XX XX de la figure 18.

La figure 21 est une vue en élévation de face d'un anneau brûleur suivant l'invention.

La figure 22 est une vue en coupe suivant la ligne XXII XXII de la figure 20.

La figure 23 est une vue en coupe d'une bride suivant la ligne XXIII XXIII de la figure 21.

La figure 24 est une variante de réalisation de la figure 23.

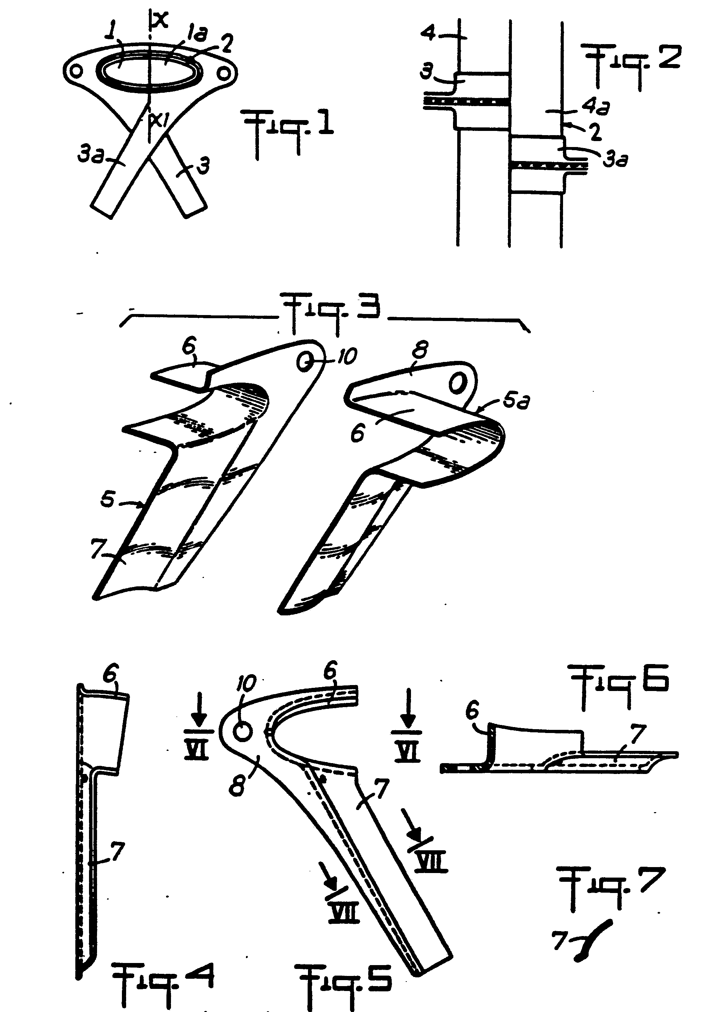

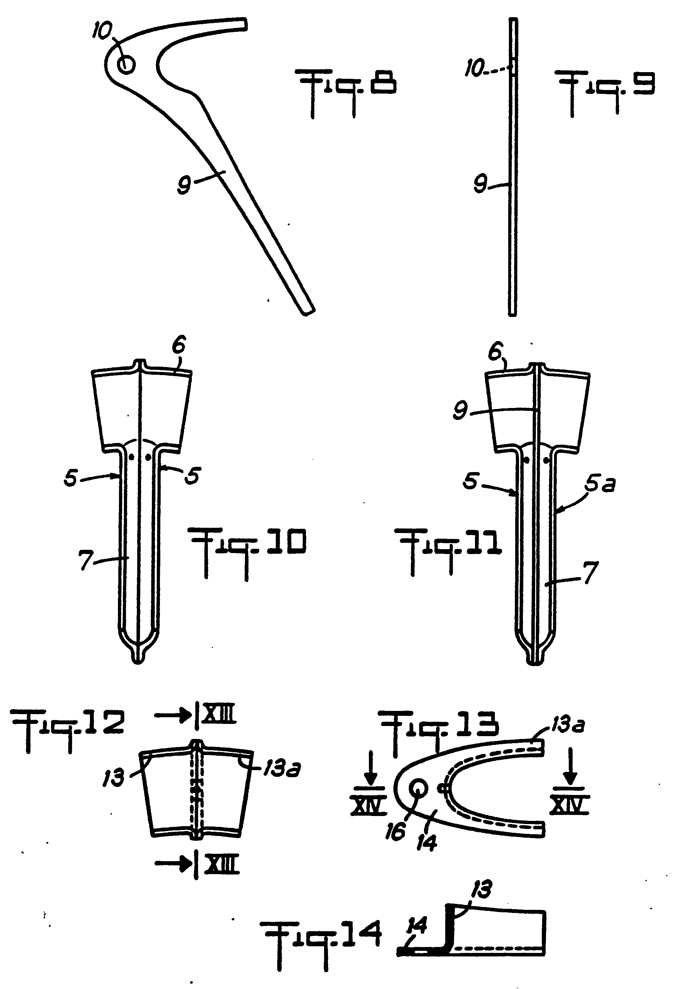

Aux figures 1 et 2, on a représenté une phase du procédé de fabrication d'un anneau brûleur dans lequel celui-ci est réalisé par bobinage sur un mandrin torique constitué de deux éléments 1, 1a séparés suivant un plan radial $XX_1$ et de section elliptique, d'un matériau 2 composite réfractaire du type céramique, ou carbone.

Lorsque le bobinage 2 est parvenu à une épaisseur déterminée, notamment à mi-épaisseur de l'anneau définitif, des éléments rapportés tels que des bras radiaux 3, 3a (Fig. 1 et 2) sont fixés sur le bobinage 2. Ces éléments rapportés 3, 3a sont groupés par paires et disposés en quinconce sur les demi-tores dans l'ordre où ils apparaîtront sur l'anneau définitif (Fig. 2).

Après liaison avec sur l'anneau bobiné 2 des éléments rapportés par exemple les bras radiaux 3, 3a, le bobinage est repris jusqu'à l'épaisseur définitive et l'ensemble est céramisé ou carbonisé. La dernière opération consiste a séparer les demi-tores suivant l'axe $XX_1$, notamment en sciant circonférentiellement l'anneau bobiné 2, de manière à obtenir deux gouttières semi-annulaires symétriques 4, 4a comme représenté aux figures 21, 22, et sur lesquelles sont fixés des éléments rapportés tels que 3.

Chacune des gouttières semi-annulaires-constituant l'un des anneaux 4 suivant l'invention provenant d'un même demi-tore ne peut être utilisée que sur deux anneaux brûleurs différents.

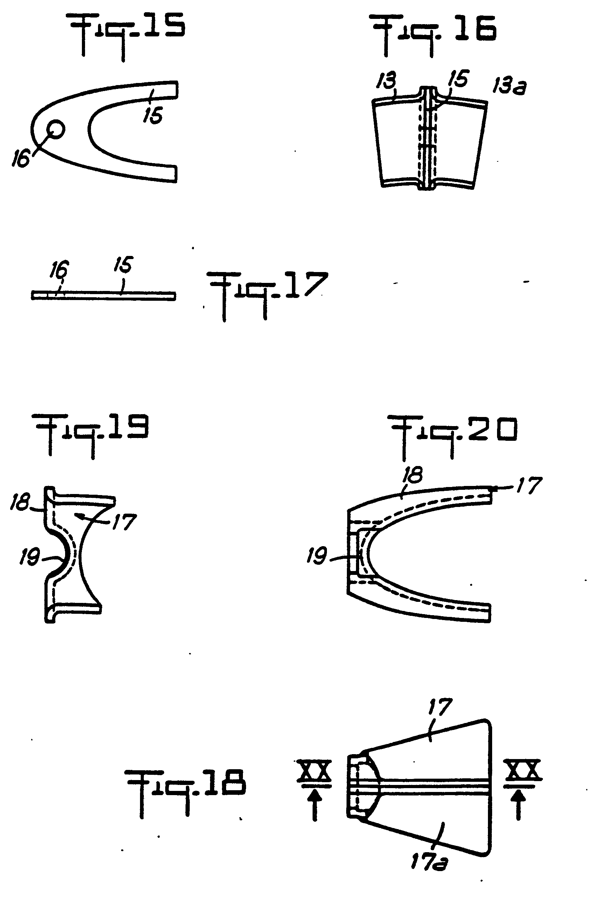

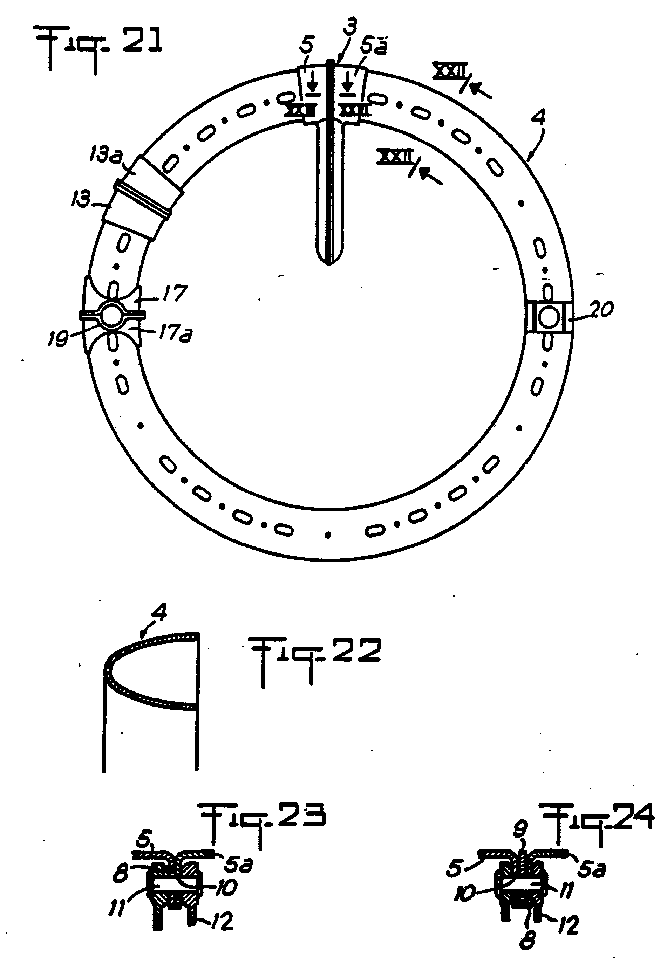

Les bras radiaux 3 qui sont fixés sur l'anneau 4 sont constitués chacun de deux demi-coquilles symétriques 5, 5a (Fig. 3 à 7) comportant chacune un demi-manchon 6, une demi- gouttière radiale 7 et une arête amont 8 constituant à la fois une bride de fixation et un raidisseur.

Les demi-coquilles symétriques 5, 5a sont collées l'une sur l'autre (Fig. 10) et elles sont fixées sur l'anneau 2 en cours d'opération de bobinage comme il a été décrit ci-dessus (Fig. 1 et 2).

Suivant un autre mode de réalisation les demi-coquilles 5, 5a (Fig. 8, 9, 11) sont collées l'une sur l'autre par l'intermédiaire d'une entretoise 9 présentant la même forme que celle de l'arête amont 8.

Les arêtes dorsales 8, et l'entretoise 9 peuvent comporter éventuellement un orifice 10 dans lequel est engagé un axe 11 (Fig. 23, 24) sur lequel sont montées des biellettes 12 solidarisant l'anneau 4 au canal ou au corps central.

Par ailleurs, l'anneau brûleur 4 comporte aussi des brides de fixation simples qui sont constituées de deux demi- manchons symétriques 13, 13a (Fig. 12, 13, 14, 21) comportant chacun une bride radiale 14 constituant le plan de joint des manchons.

Suivant une variante de réalisation représentée aux figures 15, 16, 17 une entretoise 15 ayant la forme des brides 14 est interposée entre les manchons 13, 13a.

Les brides 14 sont collées l'une contre l'autre soit directement (Fig. 12), soit par l'intermédiaire de l'entretoise 15 (Fig. 16) puis l'ensemble est intégré à l'anneau comme il a été décrit c'dessus (Fig. 1 et 2).

Les brides 14 et les entretoises dorsales 15 comportent un orifice 16 (Fig. 12, 13, 14, 15) pour la fixation des biellettes 12 (Fig. 23, 24) solidarisant l'anneau au canal ou au corps central.

Aux figures 18 à 20 sont représentés des bossages destinés au passage des tubes d'alimentation d'une rampe de carburant.

Ces bossages sont constitués de deux demi-manchons 17, 17a (Fig. 18, 21) en matière céramique et comportant des brides 18 présentant une empreinte semi-cylindrique 19 destinée au passage des tubes d'alimentation de la rampe de carburant. Les deux demi- manchons 17, 17a, lorsqu'ils sont collés l'un sur l'autre sont intégrés aux demi-tores selon le procédé décrit ci-dessus.

A la figure 21 on a représenté en 20 un autre mode de réalisation d'un bossage destiné aux tubes d'alimentation en carburant.

## Revendications

1. Procédé de fabrication d'un anneau brûleur en matériau composite présentant en section la forme d'une gouttière, caractérisé en ce que l'anneau est réalisé par bobinage sur un mandrin torique (1, 1a) d'un matériau réfractaire (2) du type céramique ou carbone, et lorsque le bobinage (2) est parvenu à une épaisseur déterminée des éléments rapportés (3, 13, 17) sont fixés sur le bobinage dont la réalisation est reprise ensuite jusqu'à ce qu'il atteigne son épaisseur définitive en intégrant lesdits éléments rapportés (3, 13,17), ledit bobinage après une céramisation ou une carbonisation étant ensuite découpé circonférentiellement suivant un plan perpendiculaire à l'axe du tore de manière à obtenir deux anneaux (4, 4a) en forme de gouttière qui sont séparés du mandrin (1, 1a) et portent les éléments rapportés (3, 13, 17).

2. Procédé suivant la revendication 1, caractérisé en ce que les éléments rapportés (3, 13, 17) sont groupés par paires et disposés en quinconce sur les deux moitiés du bobinage (2) en forme de tore.

3. Procédé suivant la revendication 1, caractérisé en ce que le mandrin sur lequel est bobiné l'anneau (2) est constitué de deux éléments (1, 1a) séparés suivant un plan radial $XX_1$ et de section elliptique.

4. Anneau brûleur en matériau composite réalisé suivant le procédé de la revendication 1, caractérisé en ce qu'il est constitué d'un élément bobiné (4) à partir de fibres en matériau composite réfractaire et présentant en section la forme d'une gouttière, ledit anneau (4) portant des éléments rapportés (3, 13, 17) intégrés à celui-ci.

5. Anneau brûleur suivant la revendication 4, caractérisé en ce que sur l'anneau (4) sont rapportés des bras radiaux qui sont constitués chacun de deux demi-coquilles symétriques (5, 5a) en matériau céramique qui présentent chacune un demi-manchon 6, une demi-gouttière radiale (7) et une arête amont (8) constituant à la fois une bride de fixation et un raidisseur, lesdites demi- coquilles (5, 5a) étant collées l'une contre l'autre et fixées sur l'anneau (2) au cours de l'opération de bobinage par leur demi-manchon 6.

6. Anneau brûleur suivant la revendication 5, caractérisé en ce qu'une entretoise (9) est disposée entre les deux demi-coquilles (5, 5a) lors de leur fixation.

7. Anneau brûleur en matériau composite réalisé suivant le procédé de la revendication 1, caractérisé en ce que sur l'anneau sont rapportées des brides de fixation constituées chacune de deux demi-manchons (13, 13a) symétriques en matériau céramique qui présentent chacun une bride radiale (14) constituant le plan de joint des manchons.

8. Anneau brûleur suivant la revendication 7, caractérisé en ce qu'une entretoise (15) est disposée entre les brides radiales.

9. Anneau brûleur suivant les revendications 7 et 8, caractérisé en ce que les brides (8, 14) et entretoises (9, 15) dorsales comportent une ouverture (10, 16) pour la fixation des biellettes (12) solidarisant l'anneau (4) au canal ou au corps central.

10. Anneau brûleur en matériau composite réalisé suivant le procédé de la revendication 1, caractérisé en ce que sur l'anneau (4) sont rapportés des bossages d'arrivée de carburant constitués chacun de deux demi-manchons (17, 17a) en matériau céramique qui présentent chacun une bride (18) radiale constituant le plan de joint des manchons, lesdites brides (18) comportant une empreinte semi-cylindrique (19) destinée au passage des tubes d'alimentation en carburant d'une rampe.


**Patentansprüche**

1. Verfahren zur Herstellung eines Flammenhalterrings aus Verbundwerkstoff mit einem Querschnitt in Form einer Rinne,
dadurch gekennzeichnet,
daß der Flammenhalterring durch Herstellung einer Wicklung (2) aus einem hochtemperaturfesten Keramik- oder Kohlenstoffmaterial auf einem Wickelkern (1, 1a) gebildet wird, wobei dann, wenn die Wicklung (2) eine vorbestimmte Dicke erreicht hat, Anbauelemente (3, 13, 17) an ihr fixiert werden,
daß die Herstellung der Wicklung dann fortgesetzt wird, bis sie ihre endgültige Dicke erreicht, wobei die Anbauelemente (3, 13, 17) integriert werden,
und daß die Wicklung nach einer Keramisierung oder Karbonisierung in Umfangsrichtung in einer zur Achse des Torus senkrechten Ebene derart aufgeschnitten wird, daß man zwei Ringe (4, 4a) in Form von Rinnen erhält, die von dem dem Wickelkern (1, 1a) getrennt werden und die genannten Anbauelemente (3, 13, 17) tragen.

2. Verfahren nach Anspruch 1, dadurch gekennzeichnet, daß die Anbauelemente (3, 13, 17) paarweise gruppiert und auf den beiden Hälften der torusförmigen Wicklung (2) versetzt angeordnet sind.

3. Verfahren nach Anspruch 1, dadurch gekennzeichnet, daß der Wickelkern, auf dem der Ring (2) gewickelt wird, aus zwei Elemente (1, 1a) besteht, die in einer radialen Ebene (XX₁) getrennt sind und elliptischen Querschnitt haben.

4. Nach dem Verfahren nach Anspruch 1 hergestellter Flammenhalterring, dadurch gekennzeichnet, daß er aus einem aus Fasern eines hochtemperaturfesten Verbundwerkstoffs gewickelten Element (4) besteht und einen rinnenförmigen Querschnitt hat und daß der Ring (4) Anbauelemente (3, 13, 17) trägt, die in ihn integriert sind.

5. Flammenhalterring nach Anspruch 4, dadurch gekennzeichnet, daß an dem Ring (4) radiale Arme angebracht sind, die jeweils aus zwei symmetrischen Halbschalen (5, 5a) aus keramischem Werkstoff mit jeweils einer Halbmanschette (6), einer radialen Halbrinne (7) und einer stromaufwärtigen Kante (8) bestehen, wobei letztere (8) gleichzeitig einen Befestigungsflansch und eine Versteifung bildet, und daß die Halbschalen (5, 5a) während des Wickelns miteinander verklebt und über ihre Halbmanschetten (6) an dem Ring (2) fixiert sind.

6. Flammenhalterring nach Anspruch 5, dadurch gekennzeichnet, daß zwischen den beiden Halbschalen (5, 5a) ein Abstandsteil (10) angeordnet ist, wenn sie fixiert sind.

7. Nach dem Verfahren nach Anspruch 1 hergestellter Flammenhalterring, dadurch gekennzeichnet, daß an dem Ring Befestigungsflansche angebracht sind, die jeweils aus zwei symmetrischen Halbmanschetten (13, 13a) aus keramischem Werkstoff bestehen, von denen jede einen radialen Flansch (14) besitzt, der die Verbindungsebene der Manschetten bildet.

8. Flammenhalterring nach Anspruch 7, dadurch gekennzeichnet, daß zwischen den beiden radialen Flanschen ein Abstandsteil (15) angeordnet ist.

9. Flammenhalterring nach Anspruch 7 und 8, dadurch gekennzeichnet, daß die Flansche (8, 14) und die rückenseitigen Abstandsteile (9, 15) eine Öffnung (10, 16) zur Befestigung von Pleuelstangen (12) besitzen, die den Ring (4) mit dem Kanal oder dem Zentralkörper verbinden.

10. Nach dem Verfahren nach Anspruch 1 hergestellter Flammenhalterring, dadurch gekennzeichnet, daß an dem Ring (4) Vorsprünge für die Kraftstoffzuführung angebracht sind, die jeweils aus zwei Halbmanschetten (17, 17a) aus keramischem Werkstoff bestehen, von denen jede einen die Verbindungsebene der Manschetten bildenden radialen Flansch (18) besitzt, wobei diese Flansche (18) eine halbzylindrische Vertiefung (19) für den Durchtritt der Leitungen zur Speisung einer Rampe mit Kraftstoff aufweisen.


**Claims**

1. Process for manufacturing a ring burner of composite material having the shape of a trough in cross-section, characterized in that the ring is constructed by winding on a toric mandrel (1, 1a) a refractory material (2) of ceramic type or carbon and, when the winding (2) has reached a predetermined thickness, separate elements (3, 13, 17) are fastened to the winding, whose construction is then continued until it reaches its definitive thickness, incorporating the said separate elements (3, 13, 17), the said winding, after ceramisation or carbonization, then being cut around the circumference along a plane perpendicular to the axis of the torus, so as to obtain two rings (4, 4a) in the shape of a trough which are separated from the mandrel (1, 1a) and carry the separate elements (3, 13, 17).

2. Process according to Claim 1, characterized in that the separate elements (3, 13, 17) are grouped in pairs and arranged quincuncially on the two halves of the winding (2) in the shape of a torus.

3. Process according to Claim 1, characterized in that the mandrel onto which the ring (2) is wound is composed of two separate elements (1, 1a) which follow a radial plane $XX^1$ and are of eliptical section.

4. Ring burner of composite material constructed according to the process of Claim 1, characterized in that it is composed of a wound element (4) made from fibres of refractory composite material and having a cross-section in the shape of a trough, the said ring (4) carrying separate elements (3, 13, 17) incorporated into the latter.

5. Ring burner according to Claim 4, characterized in that there are attached to the ring (4) radial arms which are each composed of two symmetrical half shells (5, 5a) of ceramic material, which each have a half sleeve 6, a radial half trough (7) and, upstream, a blade (8) which is composed of both a fastening flange and a stiffener, the said half shells (5, 5a) being glued to one another and fastened to the ring (2) in the course of the binding operation by means of their half sleeve 6.

6. Ring burner according to Claim 5, characterized in that a brace (9) is arranged between the two half shells (5, 5a) when they are fastened.

7. Ring burner of composite material constructed according to the process of Claim 1, characterized in that there are attached to the ring fastening flanges each composed of two symmetrical half sleeves (13, 13a) of ceramic material which each have a radial flange (14) constituting the joining plane of the sleeves.

8. Ring burner according to Claim 7, characterized in that a brace (15) is arranged between the radial flanges.

9. Ring burner according to Claims 7 and 8, characterized in that the flanges (8, 14) and back braces (9, 15) have an opening (10, 16) for fastening connecting rods (12) securing the ring (4) to the duct or to the central body.

10. Ring burner of composite material constructed according to the process of Claim 1, characterized in that there are attached to the ring (4) bosses for conveying fuel, each composed of two half sleeves (17, 17a ) of ceramic material which each have a radial flange (18) constituting the joining plane of the sleeves, the said flanges (18) having a semi-cylindrical recess (19) intended for the passage of the tubes for supplying fuel from a float.

0 215 717

Fig.1

Fig.2

Fig.3

Fig.4

Fig.5

Fig.6

Fig.7

Fig. 8

Fig. 9

Fig. 10

Fig. 11

Fig. 12

Fig. 13

Fig. 14

Fig. 15

Fig. 16

Fig. 17

Fig. 19

Fig. 20

Fig. 18

# Fig. 21

# Fig. 22

# Fig. 23

# Fig. 24